# EUROPEAN PATENT APPLICATION

(11) **EP 2 879 263 A1**
(43) Date of publication of application: **03.06.2015**
(21) Application number: 14003095.8
(22) Date of filing: 08.09.2014
(51) Int. Cl.: H02J 3/38

(54) **Power supply device, power supply system, and electronic device**

(30) Priority: 10.09.2013 JP 2013187278
(71) Applicant: Sharp Kabushiki Kaisha, Osaka-shi, Osaka 545-8522 (JP)
(72) Inventor: Kamiyama, Koichi, Osaka-shi, Osaka, 545-8522 (JP); Kawamura, Hiroshi, Osaka-shi, Osaka, 545-8522 (JP)
(74) Representative: Müller Hoffmann & Partner

(57) **Abstract**

A power supply device performs grid connected operation and autonomous operation. The grid connected operation is operation in which power is supplied from an AC power network and a DC power source to a load. The autonomous operation is operation in which the power supply device is disconnected from the AC power network and power is supplied from the DC power source to the load. The power supply device includes a power inverter configured to receive a DC power supplied from the DC power source and output an AC power, an operation mode switching unit configured to switch between grid connected operation and autonomous operation, and an output information control unit configured to control output information about the AC power output from the power inverter.

## Description

### BACKGROUND

### 1. Field

The present disclosure relates to a power supply device, a power supply system, and an electronic device.

### 2. Description of the Related Art

To supply power, a method of using a centralized generator and a method of using a distributed generator are available. In the case of using a centralized generator,
power that has been generated using a large power generation unit is transmitted via a power network and is then used by individual consumers. Thus, if part of the power network breaks down, for example, the consumers may become unable to use the power (power failure).

On the other hand, in the case of using a distributed generator, power that has been generated using small power generation units provided near individual consumers is used by the consumers without via a power network. Thus, even if a power failure occurs, the individual consumers are able to use the power generated by the distributed generator.

When power supplied from the power network is available, the distributed generator operates such that the frequency and phase thereof are the same as those of the power network (grid connected operation). However, when a power failure occurs, the distributed generator operates independently of the power network (autonomous operation).

In the distributed generator, such as small power generation units, the amount of power to be generated is limited, and thus the power to be supplied to a load may be insufficient.

Japanese Unexamined Patent Application Publication No. 2008-125295 suggests a device that monitors power consumption of a load, such as an electronic device, and selectively disconnects the load on the basis of the relationship between the power consumption and the power that can be supplied to the load (achieves a balance between supplied power and consumed power). However, installation of such a device may involve an increase in cost.

### SUMMARY

Accordingly, an embodiment of the present disclosure provides a power supply device, such as a distributed generator, and an electronic device that are capable of achieving a balance between supplied power and consumed power without monitoring power consumption in a load.

According to an aspect of the present disclosure, there is provided a power supply device including a power inverter, an operation mode switching unit, and an output information control unit. The power inverter is configured to receive a DC power supplied from a DC power source and output an AC power. The operation mode switching unit is configured to switch between grid connected operation and autonomous operation that are performed by the power supply device. The grid connected operation is operation in which power is supplied from an AC power network and a DC power source to a load. The autonomous operation is operation in which the power supply device is disconnected from the AC power network and power is supplied from the DC power source to the load. The output information control unit is configured to control output information about the AC power output from the power inverter.

According to another aspect of the present disclosure, there is provided a power supply system including a first power supply device and a second power supply device. The first power supply device is configured to perform grid connected operation and autonomous operation. The grid connected operation is operation in which power is supplied from an AC power network and a DC power source to a load. The autonomous operation is operation in which the first power supply device is disconnected from the AC power network and power is supplied from the DC power source to the load. The first power supply device includes a first power inverter, an operation mode switching unit, and an output information control unit. The first power inverter is configured to receive a DC power supplied from the DC power source and output an AC power. The operation mode switching unit is configured to switch between the grid connected operation and the autonomous operation. The output information control unit is configured to control output information about the AC power output from the first power inverter. The output information control unit changes the output information from setting information that is preset during the grid connected operation, before the grid connected operation is switched to the autonomous operation, or when the grid connected operation is switched to the autonomous operation, or after the grid connected operation is switched to the autonomous operation. The second power supply device adjusts an amount of power to be supplied to the load in accordance with the output information.

According to another aspect of the present disclosure, there is provided an electronic device including a monitoring unit and a power consumption adjusting unit. The monitoring unit is configured to monitor output information about an AC power supplied to the electronic device. The power consumption adjusting unit is configured to adjust power consumption in accordance with the output information monitored by the monitoring unit.

### BRIEF DESCRIPTION OF THE DRAWINGS

Fig. 1 is a diagram illustrating a schematic configuration of a power supply device according to an embodiment of the present disclosure;
Fig. 2 is a diagram illustrating a detailed configuration of a power conditioner;
Fig. 3 is a diagram illustrating a detailed configuration of an electronic device;
Fig. 4 is a flowchart illustrating a process executed by the power conditioner;
Fig. 5 is a flowchart illustrating a process executed by the electronic device;
Fig. 6 is a flowchart illustrating a process executed by the power conditioner during autonomous operation;
Fig. 7 is a flowchart illustrating a process executed by the electronic device during autonomous operation;
Fig. 8 is a diagram illustrating a schematic configuration of a power supply device;
Fig. 9 is a diagram illustrating a detailed configuration of an AC-input-type power storage device;
Fig. 10 is a flowchart illustrating another process executed by the power conditioner during autonomous operation;
Fig. 11 is a flowchart illustrating a process executed by the AC-input-type power storage device during autonomous operation;
Fig. 12 is a diagram illustrating a schematic configuration of a power supply device;
Fig. 13 is a flowchart illustrating a process executed by a distribution board;
Fig. 14 is a diagram illustrating a schematic configuration of a power supply device;
Fig. 15 is a flowchart illustrating a process executed by a power conditioner;
Fig. 16 is a flowchart illustrating a process executed by the power conditioner in the case of cancelling frequency control;
Fig. 17 is a flowchart illustrating a process executed by an electronic device in the case of cancelling adjustment of power consumption;
Fig. 18 is a diagram illustrating a schematic configuration of a power supply system;
Fig. 19 is a flowchart illustrating a process executed by a fuel-cell-mounted power supply device; and
Fig. 20 is a flowchart illustrating a process executed by a power-storage-device-mounted power supply device during autonomous operation.

### DESCRIPTION OF THE EMBODIMENTS

Hereinafter, embodiments of the present disclosure will be described in detail with reference to the attached drawings. In the drawings, the same or corresponding parts are denoted by the same reference numerals, and the description thereof is not repeated.

### First Embodiment

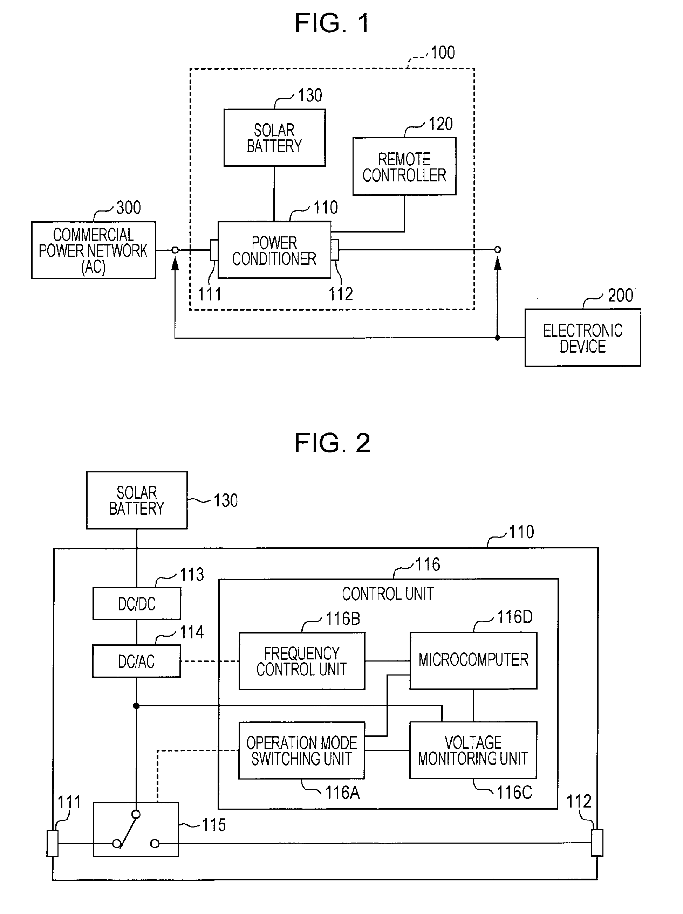

Fig. 1 is a diagram illustrating a schematic configuration of a power supply device 100 according to an embodiment of the present disclosure.

The power supply device 100 includes a solar battery 130, a power conditioner 110, and a remote controller 120. The power conditioner 110 serves as a power inverter that converts a direct current (DC) power generated by the solar battery 130 to an alternating current (AC) power and outputs the AC power. The remote controller 120 is used by a user to transmit information to or receive information from the power conditioner 110.

The power conditioner 110 includes two output terminals: a first output terminal 111 and a second output terminal 112.

The first output terminal 111 is connected to a commercial power network 300. The commercial power network 300 is an AC power network. Here, a certain voltage and a certain frequency of the AC power supplied from the AC power network are AC 100 V and 60 Hz, or may be AC 200 V and 50 Hz. The power conditioner 110 operates in conjunction with the commercial power network 300 (grid connected operation). During grid connected operation, the frequency and phase output from the commercial power network 300 are equal to those outputs from the power conditioner 110.

During grid connected operation, an electronic device 200 serving as a load that consumes power is connected to the first output terminal 111 (and the commercial power network 300), and uses the power supplied therefrom. The electronic device 200 is connected to the second output terminal 112 if necessary.

Fig. 2 is a diagram illustrating a detailed configuration of the power conditioner 110. The power conditioner 110 includes a DC/DC converter 113, a DC/AC inverter 114 (power inverter), a relay 115, and a control unit 116. The DC/DC converter 113 efficiently obtains a DC power generated by the solar battery 130 (MPPT control). The DC/AC inverter 114 converts the DC power obtained by the DC/DC converter 113 from the solar battery 130 to an AC power and outputs the AC power. The relay 115 switches between a connection of the DC/AC inverter 114 to the first output terminal 111 and a connection of the DC/AC inverter 114 to the second output terminal 112. The relay 115 is switched, by an operation mode switching unit 116A (described below), to the first output terminal 111 side when grid connected operation is performed, and to the second output terminal 112 side when autonomous operation (described below) is performed.

The control unit 116 includes the operation mode switching unit 116A, a frequency control unit 116B, a voltage monitoring unit 116C, and a microcomputer 116D. The operation mode switching unit 116A switches the operation mode (operation) of the power conditioner 110 to either of grid connected operation and autonomous operation. The frequency control unit 116B controls the frequency of an AC power (hereinafter it may be simply referred to as a "frequency") output from the DC/AC inverter 114. The voltage monitoring unit 116C monitors the output voltage from the DC/AC inverter 114. The microcomputer 116D controls the operation mode switching unit 116A, the frequency control unit 116B, and the voltage monitoring unit 116C.

With the above-described configuration, the power supply device 100 is capable of converting a DC power generated by the solar battery 130 to an AC power of a certain frequency, and then outputting the AC power to the first output terminal 111 or the second output terminal 112.

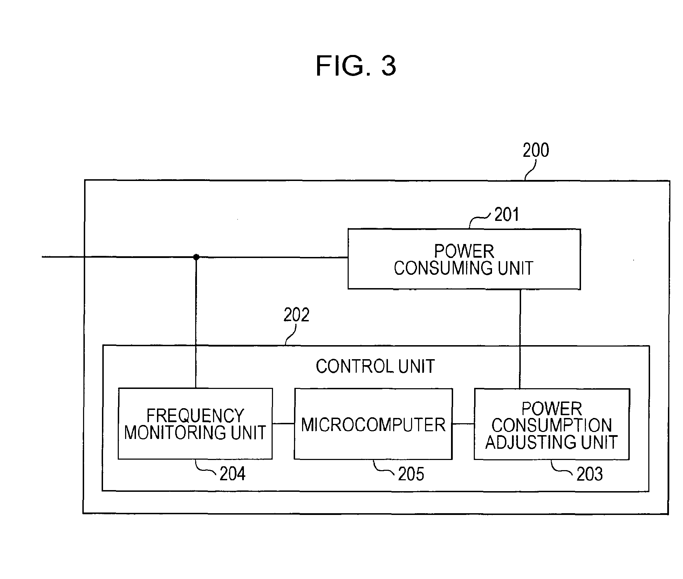

Fig. 3 illustrates a detailed configuration of the electronic device 200. The electronic device 200 includes a power consuming unit 201, which consumes an AC power supplied to the electronic device 200, and a control unit 202. The control unit 202 includes a power consumption adjusting unit 203, a frequency monitoring unit 204, and a microcomputer 205. The power consumption adjusting unit 203 adjusts the power consumption of the power consuming unit 201. The frequency monitoring unit 204 monitors the frequency of an AC power supplied to the electronic device 200. The microcomputer 205 controls the power consumption adjusting unit 203 and the frequency monitoring unit 204. The power consuming unit 201 may consume a DC power that has been converted from an AC power. Adjustment of power consumption includes stopping of operation of the electronic device 200.

The electronic device 200 may be, for example, a lighting device, a liquid crystal display, or a refrigerator. Alternatively, the electronic device 200 may be an induction motor whose rotation rate changes in proportion to the frequency of the AC power supplied thereto. In that case, the control unit 202 is not necessary.

With the above-described configuration, the electronic device 200 is capable of adjusting power consumption (including stopping of operation) in accordance with the frequency of the AC power supplied thereto.

Referring back to Fig. 1, the electronic device 200 is designed to operate typically using power supplied from the commercial power network 300 (AC 100 V, 60 Hz). Thus, a user can use the electronic device 200 by connecting the electronic device 200 to the first output terminal 111 during grid connected operation.

On the other hand, when the power of the commercial power network 300 is not available (when power failure occurs), the power conditioner 110 stops outputting an AC power to the first output terminal 111. Instead, the power conditioner 110 outputs an AC power to the second output terminal 112. At this time, the power conditioner 110 operates without being interconnected to the commercial power network 300 (autonomous operation). The user can use the electronic device 200 by connecting the electronic device 200 to the second output terminal 112.

During autonomous operation, the electronic device 200 operates using only the power supplied from the power supply device 100, but the power is limited to be equal to or smaller than the power generated by the solar battery 130. Under such a limit, the power consumption of the power consuming unit 201 may be decreased during autonomous operation in order to suppress the occurrence of lack of power supplied to the electronic device 200.

In the power supply device 100, when grid connected operation is switched to autonomous operation using the frequency control unit 116B, the frequency of the AC power to be supplied to the electronic device 200 is decreased from a frequency that is preset as setting information when grid connected operation is performed. For example, the setting information is a frequency supplied from the commercial power network 300 (for example, 60 Hz).

When grid connected operation is switched to autonomous operation, the frequency control unit 116B decreases the frequency of the AC power to be supplied to the electronic device 200 from the frequency of the AC power supplied from the commercial power network 300 (for example, from 60 Hz to 59 Hz). In a case where the electronic device 200 is an electronic device whose rotation rate changes in proportion to a frequency, such as an induction motor, the rotation rate decreases as the frequency decreases, and also power consumption decreases.

A power conditioner converts a DC power to an AC power (the frequency is the same as that of a commercial power network, for example, 60 Hz) by controlling inner pulses (PWM control) and outputs the AC power. The power conditioner 110 according to the first embodiment of the present disclosure adjusts a frequency parameter of inner pulses, and is thereby capable of converting a DC power generated by the solar battery 130 to an AC power of a frequency that is different from the frequency of the commercial power network (for example, 59 Hz), and outputting the AC power.

In a case where the electronic device 200 is a lighting device or the like, the power consumption adjusting unit 203 decreases the power consumption of the power consuming unit 201 as the frequency of the AC power supplied thereto decreases from 60 Hz. Specifically, the power consumption adjusting unit 203 decreases the illuminance of a lighting device or a backlight of a liquid crystal display, or increases the setting temperature of a refrigerator.

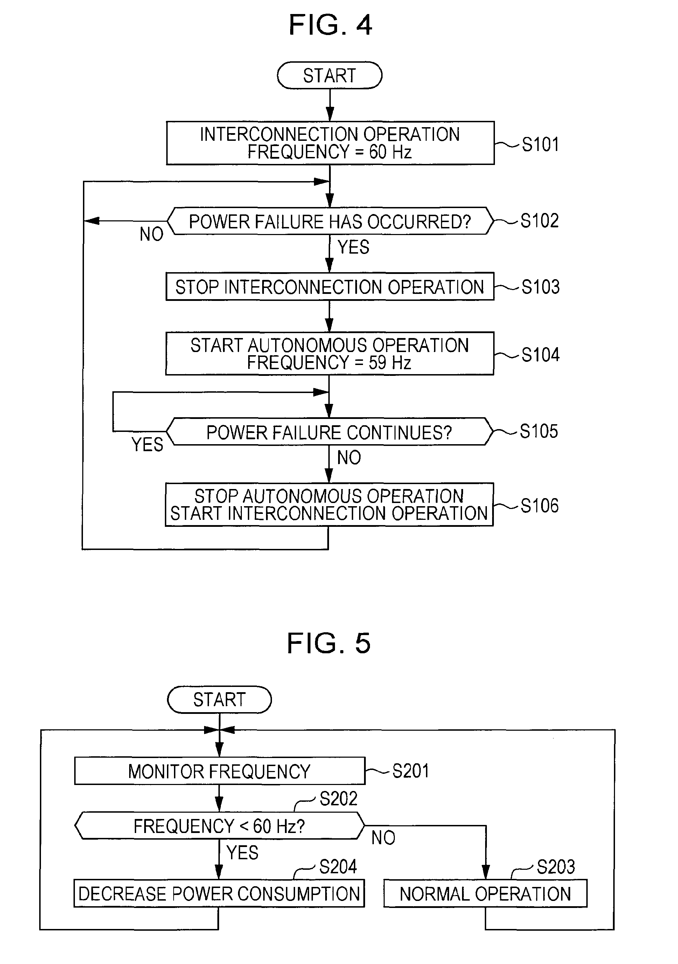

Fig. 4 is a flowchart illustrating a process executed by the power conditioner 110. Here, it is assumed that the electronic device 200 is using the power of the commercial power network 300.

Referring to Figs. 1 and 4, the power conditioner 110 is performing grid connected operation (step S101).

The power conditioner 110 determines whether or not power failure has occurred (whether or not the power of the commercial power network 300 is not available) (step S102). Whether or not power failure has occurred is determined by, for example, detecting a change in voltage or current in the first output terminal 111.

If power failure has not occurred (NO in step S102), the power conditioner 110 repeats step S102. If power failure has occurred (YES in step S102), the power conditioner 110 stops grid connected operation (step S103).

After stopping grid connected operation, the power conditioner 110 notifies a user that power failure has occurred via the remote controller 120. Accordingly, the user recognizes the occurrence of power failure, and connects the electronic device 200 to the second output terminal 112 to use the electronic device 200.

The power conditioner 110 that has stopped grid connected operation sets the frequency of the AC power to be output to the second output terminal 112 to 59 Hz and starts autonomous operation (step S104). An instruction to start autonomous operation may be provided to the power conditioner 110 by the user through an operation of the remote controller 120.

The power conditioner 110 that has started autonomous operation determines whether or not power failure continues (step S105). If power failure continues (YES in step S105), the power conditioner 110 repeats step S105. If power failure has ended (NO in step S105), the power conditioner 110 stops autonomous operation and starts grid connected operation (step S106). The user is notified of the recovery from power failure via the remote controller 120. Accordingly, the user disconnects the electronic device 200 from the second output terminal 112 and connects the electronic device 200 to the first output terminal 111 (commercial power network 300).

The power conditioner 110 that has started grid connected operation returns to step S102.

Fig. 5 is a flowchart illustrating a process executed by the electronic device 200.

Referring to Figs. 3 and 5, the electronic device 200 monitors the frequency of the AC power supplied thereto (step S201), and determines whether or not the monitored frequency is lower than 60 Hz (step S202).

If the frequency is higher than or equal to 60 Hz (NO in step S202), the electronic device 200 operates without decreasing power consumption (normally operates) (step S203). On the other hand, if the frequency is lower than 60 Hz (YES in step S202), the electronic device 200 operates with decreased power consumption (step S204).

After step S203 or S204, the electronic device 200 returns to step S201.

In this way, the frequency of the AC power to be supplied to the electronic device 200 by the power supply device 100 is set to be lower than the frequency of the commercial power network 300 during autonomous operation. Accordingly, the power consumption of the electronic device 200 may be decreased.

In the above-described first embodiment, the frequency control unit 116B controls the frequency of the AC power output from the DC/AC inverter 114. Alternatively, the frequency control unit 116B may be replaced by an output information control unit that controls output information other than the AC power output from the DC/AC inverter 114.

The output information may be, for example, the frequency of the AC power output from the DC/AC inverter 114, or the AC waveform, voltage, or current of the AC power output from the DC/AC inverter 114.

In a case where an AC waveform is used as output information, for example, an AC waveform control unit is used as an output information control unit, instead of the frequency control unit 116B. An AC waveform may be controlled by, for example, changing the duty ratio of a semiconductor switch included in an inverter circuit that constitutes a DC/AC inverter, or may be controlled by combining the AC waveform of the AC power output from the DC/AC inverter 114 and another waveform to transform the AC waveform.

In the above-described first embodiment, the power conditioner 110 decreases the frequency of the AC power to be supplied to the electronic device 200 from 60 Hz during autonomous operation (for example, 59 Hz), but the embodiment is not limited thereto. For example, the power supply device 100 may increase the frequency of the AC power during autonomous operation from 60 Hz (for example, 61 Hz). In this case, in the electronic device 200, the power consumption adjusting unit 203 decreases the power consumption of the power consuming unit 201 as the frequency of the AC power supplied thereto increases.

The setting information is not limited to the frequency that is supplied from the commercial power network 300 during grid connected operation. For example, in a case where an AC waveform control unit is used as an output information control unit, the setting information may be an AC waveform of an AC power supplied from an AC power network during grid connected operation.

In the above-described first embodiment, the timing at which the output information control unit changes output information from setting information is the timing at which grid connected operation is switched to autonomous operation, but the embodiment is not limited thereto. The timing at which output information is changed from setting information may be the timing at which the electronic device 200 is notified that grid connected operation is to be switched or has been switched to autonomous operation. Specifically, the timing may be before grid connected operation is switched to autonomous operation or after grid connected operation is switched to autonomous operation.

In the above-described first embodiment, the user connects the electronic device 200 to the first output terminal 111 or the second output terminal 112 in accordance with switching of the operation mode of the power conditioner 110, but the embodiment is not limited thereto. For example, a distribution board may be provided between the commercial power network 300 and the power supply device 100. In this case, when the power conditioner 110 performs autonomous operation, the commercial power network 300 and the power supply device 100 may be separated (disconnected) from each other by the distribution board. Accordingly, the relay 115, which switches between a connection of the DC/AC inverter 114 to the first output terminal 111 and a connection of the DC/AC inverter 114 to the second output terminal 112 for grid connected operation and autonomous operation (Fig. 2) becomes unnecessary. That is, the first output terminal 111 and the second output terminal 112 may be combined into a single output terminal.

### Second Embodiment

In the first embodiment, the power consumption of the electronic device 200 is merely decreased during autonomous operation. In contrast, in a second embodiment, a frequency is controlled to achieve a balance between the power supplied from the power supply device 100 and the power consumed by the electronic device 200.

Referring to Fig. 1, the electronic device 200 is designed to operate at AC 100 V and 60 Hz. Thus, if the power supplied from the power supply device 100 is substantially equal to the power consumed by the electronic device 200 (if both are balanced), the AC voltage of the supplied power is substantially 100 V. On the other hand, if the balance is lost, the AC voltage increases or decreases from 100 V. Specifically, the electronic device 200 always tries to draw a constant current. Thus, if the power supplied from the power supply device 100 is smaller than the power consumed by the electronic device 200, overload occurs and the AC voltage decreases.

The AC voltage of the power supplied from the power supply device 100 is equal to the voltage monitored by the voltage monitoring unit 116C. Thus, a frequency is controlled so that the AC voltage monitored by the voltage monitoring unit 116C becomes close to a certain voltage of AC 100 V, and thereby the balance between supplied power and consumed power may be achieved. The certain voltage is an AC voltage supplied from an AC power network during grid connected operation. A certain voltage of AC 100 V in an actual AC power network, for example, in a commercial power network, includes a certain margin (for example, AC 95 V to AC 105 V). Thus, in a case where the AC voltage is 95 V or higher, for example, it may be considered that the supplied power and the consumed power are substantially balanced.

In a case where the AC voltage of the supplied power is lower than 95 V, the power supply device 100 may decrease the frequency. Accordingly, the power supplied from the power supply device 100 may be maximally used without causing lack of supplied power due to overload.

On the other hand, the electronic device 200 gradually decreases the power consumption as the frequency decreases to be lower than the certain frequency of 60 Hz. Specifically, the electronic device 200 operates in three modes: power consumption suppression mode 1 to power consumption suppression mode 3. The amount of decrease in power consumption is the largest in the power consumption suppression mode 1, and becomes smaller in the order of the power consumption suppression mode 2 and the power consumption suppression mode 3. The certain frequency is the frequency of the AC power supplied from the AC power network during grid connected operation.

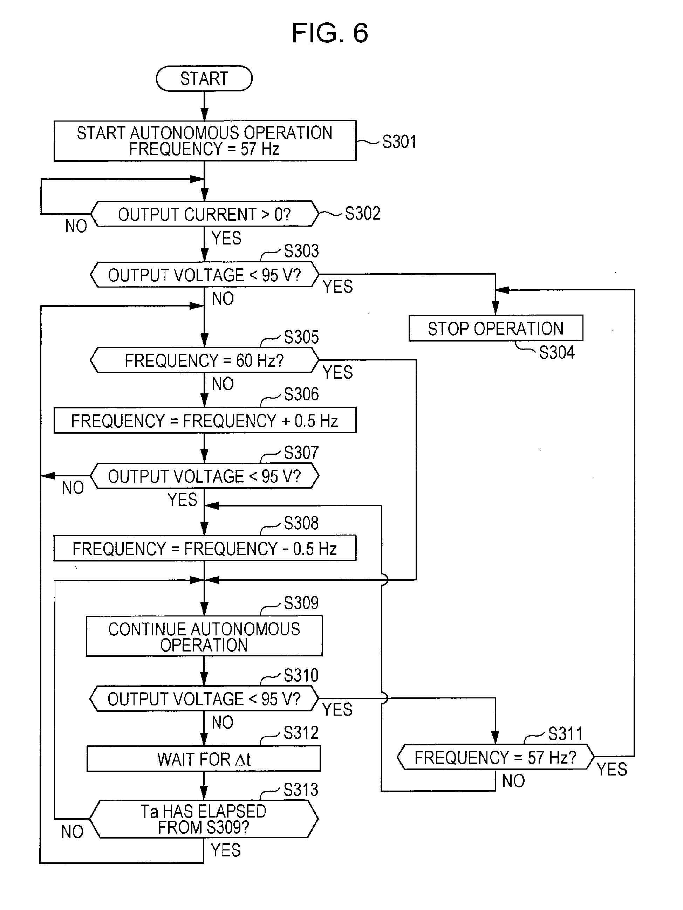

Fig. 6 is a flowchart illustrating a process executed by the power conditioner 110 during autonomous operation.

Referring to Figs. 1, 2, and 6, the power conditioner 110 sets the frequency to 57 Hz at the start of autonomous operation (step S301).

Subsequently, the power conditioner 110 measures an output current (step S302). The output current is measured using, for example, a current sensor (not illustrated) provided in the DC/AC inverter 114.

If there is no output current flowing (NO in step S302), the power conditioner 110 determines that the electronic device 200 (load) is not connected, and repeats step S302.

If there is an output current flowing (YES in step S302), the power conditioner 110 determines whether or not an output voltage is lower than 95 V (step S303). The output voltage is measured using, for example, a voltage sensor (not illustrated) provided in the DC/AC inverter 114.

If the output voltage is lower than 95 V (YES in step S303), the power conditioner 110 stops operation (step S304).

If the output voltage is higher than or equal to 95 V (NO in step S303), the power conditioner 110 determines whether or not the frequency is 60 Hz (step S305). If the frequency is 60 Hz (YES in step S305), the power conditioner 110 continues autonomous operation at the frequency (step S309). On the other hand, if the frequency is not 60 Hz (NO in step S305), the power conditioner 110 increases the frequency by 0.5 Hz (step S306), and determines again whether or not the output voltage is lower than 95 V (step S307). If the output voltage at the time is higher than or equal to 95 V (NO in step S307), the power conditioner 110 returns to step S305. If the output voltage at the time is lower than 95 V (YES in step S307), the power conditioner 110 decreases the frequency by 0.5 Hz (step S308), and continues autonomous operation at the frequency (step S309).

After step S309, the power conditioner 110 determines again whether or not the output voltage is lower than 95 V (step S310). In step S310, if the output voltage is lower than 95 V (YES in step S310), the power conditioner 110 proceeds to step S311. In step S311, the power conditioner 110 determines whether or not the frequency is 57 Hz. If the frequency is 57 Hz (YES in step S311), the power conditioner 110 stops operation (step S304). If the frequency is not 57 Hz (NO in step S311), the power conditioner 110 returns to step S308 to decrease the frequency. In step S310, if the output voltage is higher than or equal to 95 V (NO in step S310), the power conditioner 110 continues autonomous operation for a certain period (Δt) in that state (step S312). After that, the power conditioner 110 determines whether or not a certain period (Ta) has elapsed from step S309 (step S313).

If the certain period (Ta) has not elapsed (NO in step S313), the power conditioner 110 returns to step S309. On the other hand, if the certain period (Ta) has elapsed (YES in step S313), the power conditioner 110 returns to step S305.

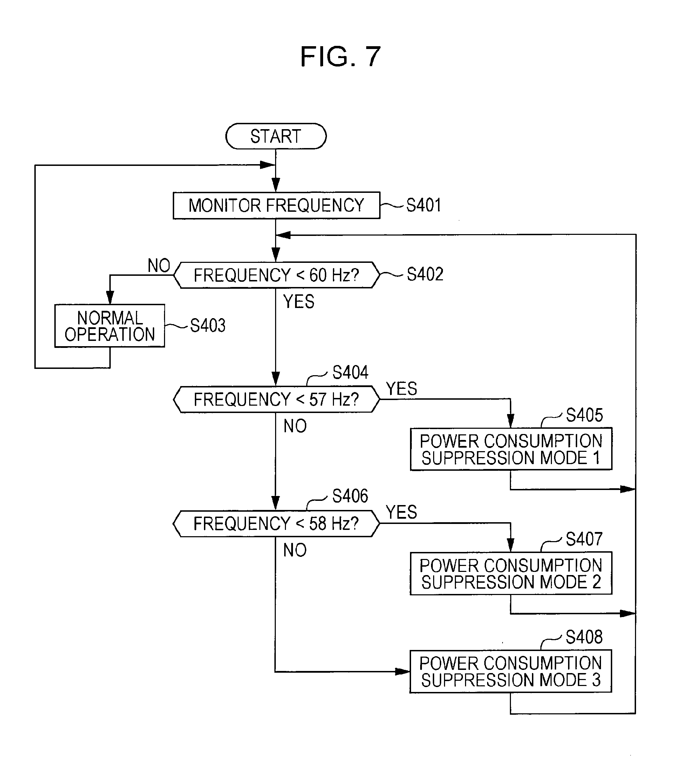

Fig. 7 is a flowchart illustrating a process executed by the electronic device 200 during autonomous operation.

Referring to Figs. 3 and 7, the electronic device 200 monitors the frequency of the AC power supplied thereto (step S401), and determines whether or not the frequency is lower than 60 Hz (step S402).

If the frequency is higher than or equal to 60 Hz (NO in step S402), the electronic device 200 operates without decreasing power consumption (normally operates) (step S403), and returns to step S401. On the other hand, if the frequency is lower than 60 Hz (YES in step S402), the electronic device 200 determines whether or not the frequency is lower than 57 Hz (step S404).

If the frequency is lower than 57 Hz (YES in step S404), the electronic device 200 operates in the power consumption suppression mode 1 (step S405). On the other hand, if the frequency is higher than or equal to 57 Hz (NO in step S404), the electronic device 200 determines whether or not the frequency is lower than 58 Hz (step S406).

If the frequency is lower than 58 Hz (YES in step S406), the electronic device 200 operates in the power consumption suppression mode 2 (step S407). On the other hand, if the frequency is higher than or equal to 58 Hz (NO in step S406), the electronic device 200 operates in the power consumption suppression mode 3 (step S408).

With use of the power supply device 100 and the electronic device 200 in combination, if supplied power lacks and the AC voltage becomes lower than 95 V, the power supply device 100 decreases the frequency and accordingly the electronic device 200 decreases the power consumption. As a result, lack of supplied power is overcome, the AC voltage recovers to be 95 V or higher, and the supplied power and consumed power are balanced.

In the above-described second embodiment, the electronic device 200 gradually decreases the power consumption as the frequency decreases from 60 Hz, but the embodiment is not limited thereto. For example, the electronic device 200 may decrease the power consumption as the frequency increases from 60 Hz. For example, in Fig. 7, it may be determined in step S402 whether or not the frequency is higher than 60 Hz, it may be determined in step S404 whether or not the frequency is higher than 63 Hz, and it may be determined in step S406 whether or not the frequency is higher than 62 Hz, and power consumption suppression modes corresponding to the individual frequencies may be set. That is, the electronic device 200 decreases the power consumption in a case where the frequency increases or decreases from 60 Hz, and increases the power consumption in a case where the frequency becomes close to 60 Hz.

### Third Embodiment

A third embodiment relates to charging of extra power.

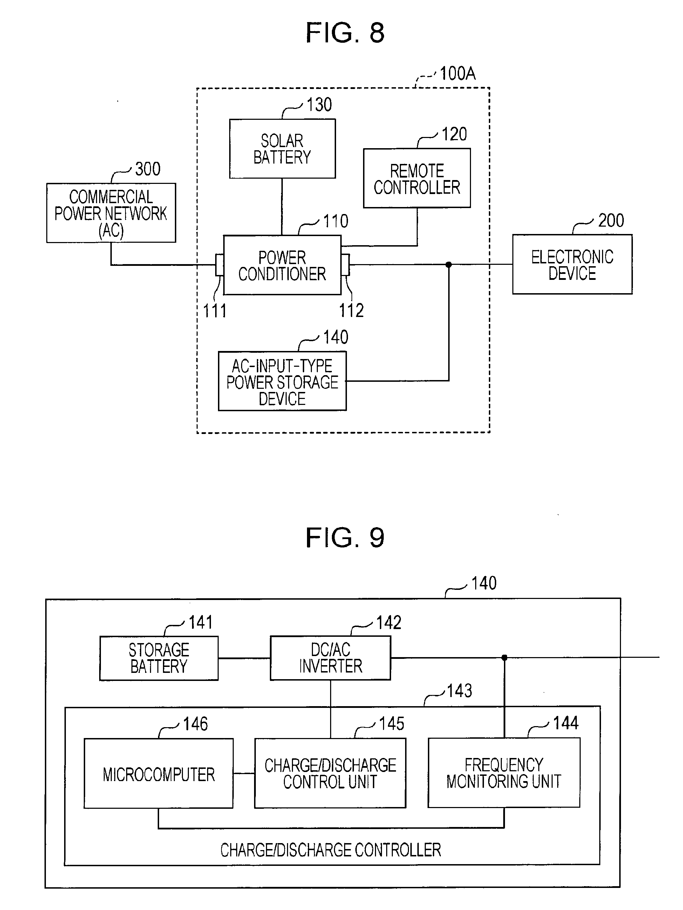

Fig. 8 is a diagram illustrating a schematic configuration of a power supply device 100A. The power supply device 100A is the same as the power supply device 100 illustrated in Fig. 1 except that the power supply device 100A includes an AC-input-type power storage device 140.

The AC-input-type power storage device 140 is connected to the second output terminal 112 of the power conditioner 110.

Fig. 9 is a diagram illustrating a detailed configuration of the AC-input-type power storage device 140. The AC-input-type power storage device 140 includes a storage battery 141, a bidirectional DC/AC inverter 142, and a charge/discharge controller 143. The storage battery 141 is capable of being charged with or discharging a DC power. The DC/AC inverter 142 converts the DC power of the storage battery 141 to an AC power and outputs the AC power, and also converts the AC power of the power conditioner 110 to a DC power to charge the storage battery 141.

The charge/discharge controller 143 includes a frequency monitoring unit 144, a charge/discharge control unit 145, and a microcomputer 146. The frequency monitoring unit 144 monitors the frequency of an output from the DC/AC inverter 142. The charge/discharge control unit 145 controls charge and discharge of the storage battery 141 by controlling the DC/AC inverter 142. The microcomputer 146 controls the frequency monitoring unit 144 and the charge/discharge control unit 145.

With the above-described configuration, the AC-input-type power storage device 140 is capable of performing charge and discharge while monitoring the frequency of the AC power of the power conditioner 110.

In a case where the power generated by the solar battery 130 of the power supply device 100A is larger than the power consumed by the electronic device 200, extra power is generated in the power supply device 100A.

Therefore, in the third embodiment, the power supply device 100A is configured to be capable of setting a frequency to be higher than 60 Hz (60 + α Hz), and the AC-input-type power storage device 140 is charged at the frequency.

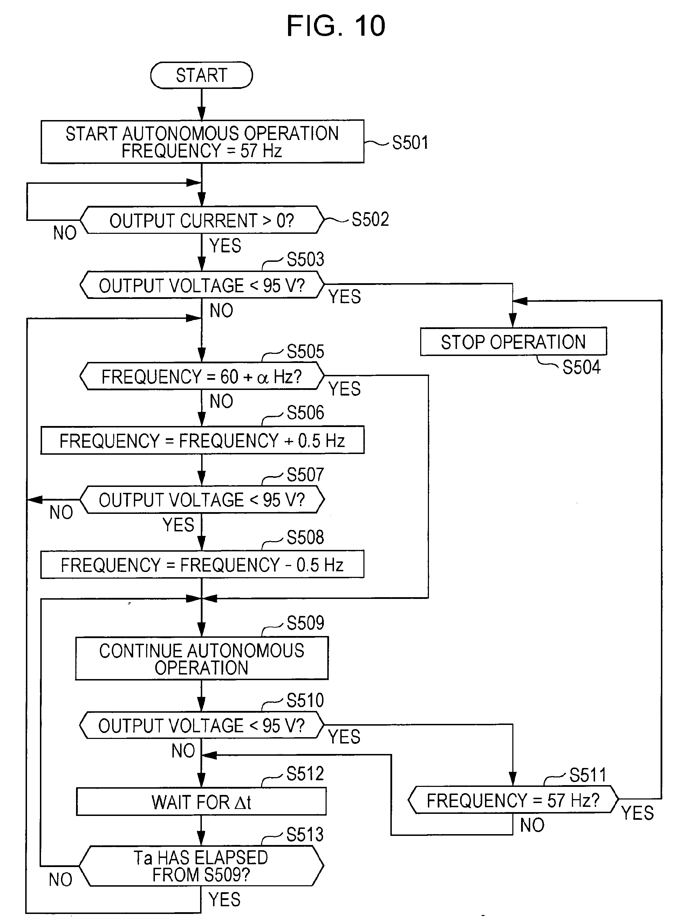

Fig. 10 is a flowchart illustrating another process executed by the power conditioner 110 during autonomous operation. Steps S501 and S502 are the same as steps S301 and S302 in Fig. 6, and thus a description will be given below from step S503.

Referring to Figs. 1, 8, and 10, if an output voltage is lower than 95 V (YES in step S503), the power conditioner 110 stops operation (step S504).

If the output voltage is higher than or equal to 95 V (NO in step S503), the power conditioner 110 determines whether or not the frequency is 60 + α Hz (step S505). If the frequency is 60 + α Hz (YES in step S505), the power conditioner 110 continues autonomous operation at the frequency (step S509). On the other hand, if the frequency is not 60 + α Hz (NO in step S505), the power conditioner 110 increases the frequency by 0.5 Hz (step S506), and determines again whether or not the output voltage is lower than 95 V (step S507). If the output voltage at the time is higher than or equal to 95 V (NO in step S507), the power conditioner 110 returns to step S505. If the output voltage at the time is lower than 95 V (YES in step S507), the power conditioner 110 decreases the frequency by 0.5 Hz (step S508), and continues autonomous operation at the frequency (step S509).

After step S509, the power conditioner 110 determines again whether or not the output voltage is lower than 95 V (step S510). In step S510, if the output voltage is lower than 95 V (YES in step S510), the power conditioner 110 proceeds to step S511. In step S511, the power conditioner 110 determines whether or not the frequency is 57 Hz. If the frequency is 57 Hz (YES in step S511), the power conditioner stops operation (step S504). If the frequency is not 57 Hz (NO in step S511), the power conditioner 110 continues autonomous operation for a certain period (Δt) in that state (step S512). After that, the power conditioner 110 determines whether or not a certain period (Ta) has elapsed from step S509 (step S513).

If the certain period (Ta) has not elapsed (NO in step S513), the power conditioner 110 returns to step S509. On the other hand, if the certain period (Ta) has elapsed (YES in step S513), the power conditioner 110 returns to step S505.

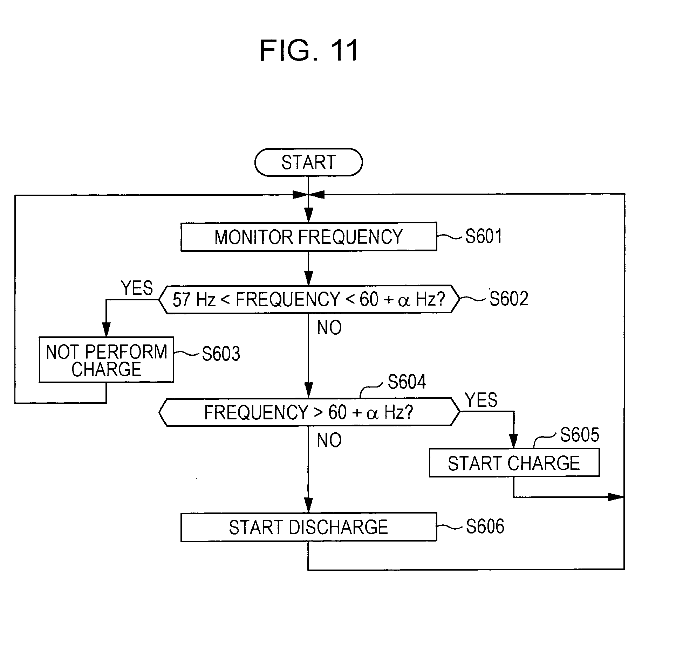

Fig. 11 is a flowchart illustrating a process executed by the AC-input-type power storage device 140 during autonomous operation.

Referring to Figs. 9 and 11, the AC-input-type power storage device 140 monitors the frequency of the AC power supplied thereto (step S601), and determines whether or not the frequency is higher than 57 Hz and is lower than 60 + α Hz (step S602).

If the frequency is higher than 57 Hz and is lower than 60 + α Hz (YES in step S602), the AC-input-type power storage device 140 does not perform charge (step S603), and returns to step S601.

On the other hand, if the frequency is lower than or equal to 57 Hz or is higher than or equal to 60 + α Hz (NO in step S602), the AC-input-type power storage device 140 determines whether or not the frequency is higher than 60 + α Hz (step S604). If the frequency is higher than 60 + α Hz (YES in step S604), the AC-input-type power storage device 140 starts charge (step S605). If the frequency is lower than or equal to 60 + α Hz (NO in step S604), the AC-input-type power storage device 140 starts discharge (step S606).

After step S605 or S606, the AC-input-type power storage device 140 returns to step S601.

Accordingly, extra power of the power supply device 100A is used to charge the AC-input-type power storage device 140, and thus the power generated by the solar battery 130 may be maximally used in an effective manner.

In the above-described third embodiment, the AC-input-type power storage device 140 starts charge when the frequency increases from 60 Hz, but the embodiment is not limited thereto. For example, the AC-input-type power storage device 140 may start charge when the frequency decreases from 60 Hz (for example, 60 - α Hz). That is, the AC-input-type power storage device 140 performs charge when the frequency increases or decreases from 60 Hz.

### Fourth Embodiment

A fourth embodiment relates to control of a connection state between a power conditioner and an electronic device.

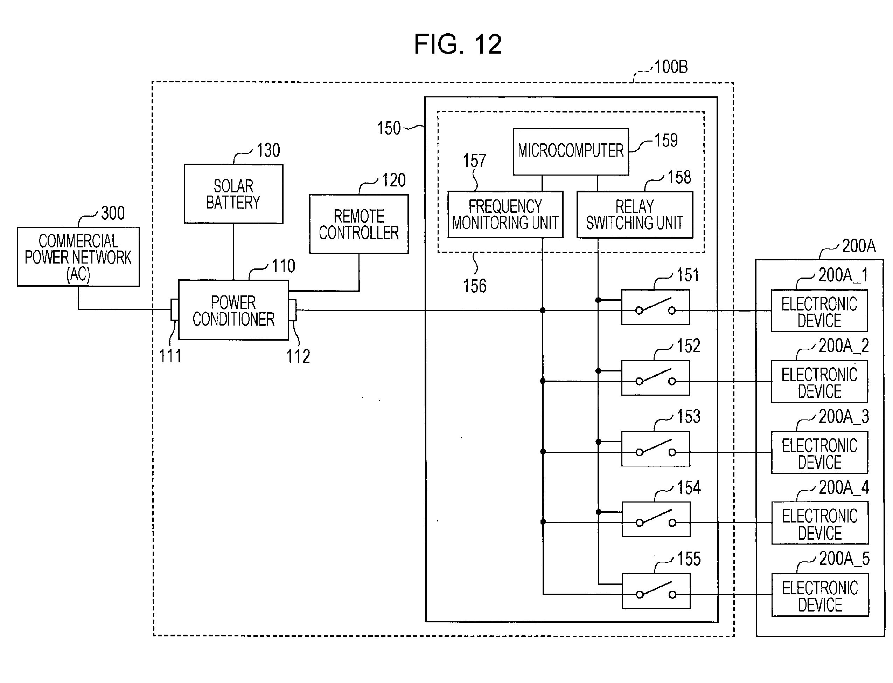

Fig. 12 is a diagram illustrating a schematic configuration of a power supply device 100B. The power supply device 100B is the same as the power supply device 100 illustrated in Fig. 1 except that the power supply device 100B includes a distribution board 150. The electronic device 200A illustrated in Fig. 12 includes a plurality of electronic devices (electronic devices 200A_1 to 200A_5).

The distribution board 150 is provided between (the second output terminal 112 of) the power conditioner 110 and the electronic device 200A. The distribution board 150 includes relays 151 to 155, which are provided between the power conditioner 110 and the electronic devices 200A_1 to 200A_5, and a control unit 156. The control unit 156 includes a frequency monitoring unit 157, a relay switching unit 158, and a microcomputer 159. The frequency monitoring unit 157 monitors the frequency of the AC power supplied from the power conditioner 110. The relay switching unit 158 switches between open and close states (on and off states) of the relays 151 to 155. The microcomputer 159 controls the frequency monitoring unit 157 and the relay switching unit 158.

With the above-described configuration, the distribution board 150 is capable of controlling the connection state between the power conditioner 110 and the electronic device 200A in accordance with a frequency. Here, the connection state means a combination of some of the electronic devices 200A_1 to 200A_5 connected to the power conditioner 110.

The distribution board 150 assigns the priority order (1 to 5) to the electronic devices 200A_1 to 200A_5. Also, the distribution board 150 switches the relays 151 to 155 so that the electronic device of the highest priority is connected to the power conditioner 110 at a frequency of 58 Hz or higher, the electronic device of the second highest priority is connected to the power conditioner 110 at a frequency of 58.5 Hz or higher, the electronic device of the third highest priority is connected to the power conditioner 110 at a frequency of 59 Hz or higher, the electronic device of the fourth highest priority is connected to the power conditioner 110 at a frequency of 59.5 Hz or higher, and the electronic device of the fifth highest priority is connected to the power conditioner 110 at a frequency of 60 Hz or higher.

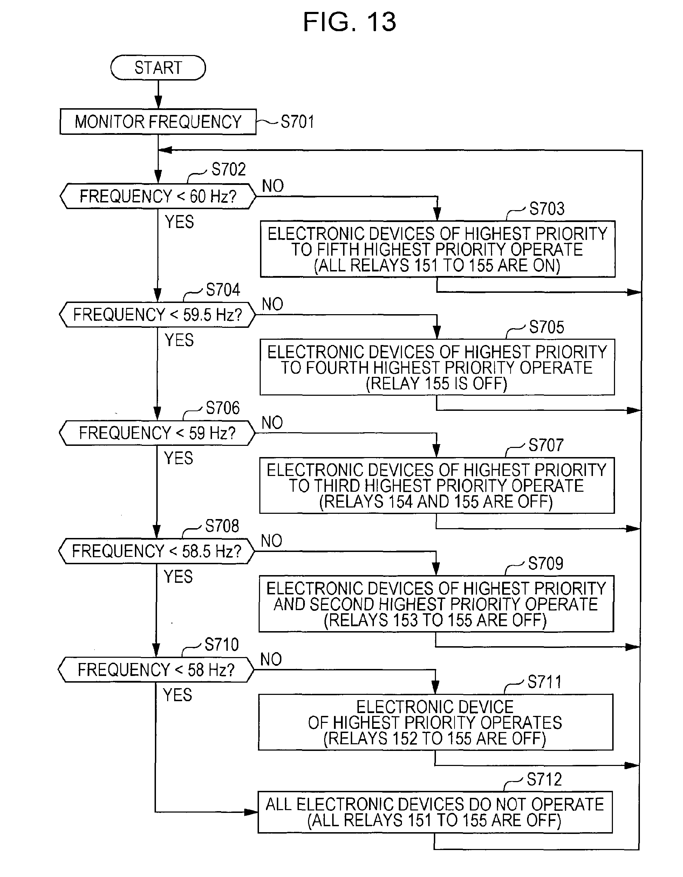

Fig. 13 is a flowchart illustrating a process executed by the distribution board 150.

Referring to Figs. 12 and 13, the distribution board 150 monitors the frequency of the AC power output from the power conditioner 110 (step S701), and determines whether or not the frequency is lower than 60 Hz (step S702).

If the frequency is higher than or equal to 60 Hz (NO in step S702), the distribution board 150 performs control so that all the relays 151 to 155 are turned on (step S703). On the other hand, if the frequency is lower than 60 Hz (YES in step S702), the distribution board 150 determines whether or not the frequency is lower than 59.5 Hz (step S704).

If the frequency is higher than or equal to 59.5 Hz (NO in step S704), the distribution board 150 performs control so that only the relay 155 is turned off (step S705). On the other hand, if the frequency is lower than 59.5 Hz (YES in step S704), the distribution board 150 determines whether or not the frequency is lower than 59 Hz (step S706).

If the frequency is higher than or equal to 59 Hz (NO in step S706), the distribution board 150 performs control so that only the relays 154 and 155 are turned off (step S707). On the other hand, if the frequency is lower than 59 Hz (YES in step S706), the distribution board 150 determines whether or not the frequency is lower than 58.5 Hz (step S708).

If the frequency is higher than or equal to 58.5 Hz (NO in step S708), the distribution board 150 performs control so that only the relays 153, 154, and 155 are turned off (step S709). On the other hand, if the frequency is lower than 58.5 Hz (YES in step S708), the distribution board 150 determines whether or not the frequency is lower than 58 Hz (step S710).

If the frequency is higher than or equal to 58 Hz (NO in step S710), the distribution board 150 performs control so that only the relays 152, 153, 154, and 155 are turned off (step S711). On the other hand, if the frequency is lower than 58 Hz (YES in step S710), the distribution board 150 performs control so that all the relays 151 to 155 are turned off (step S712).

Here, an electronic device having a relatively great necessity, such as a lighting device, may be assigned as an electronic device of high priority (the highest priority or approximate thereto). Accordingly, such an electronic device may be preferentially used over another electronic device (for example, a liquid crystal display).

In the above-described fourth embodiment, the distribution board 150 appropriately controls the connection state between the power conditioner 110 and the electronic device 200A when the frequency is lower than or equal to 60 Hz, but the embodiment is not limited thereto. For example, the distribution board 150 may appropriately control the connection state between the power conditioner 110 and the electronic device 200A when the frequency is higher than 60 Hz. For example, the distribution board 150 may switch the relays 151 to 155 so that the electronic device of the highest priority is connected to the power conditioner 110 at a frequency of 62 Hz or lower, the electronic device of the second highest priority is connected to the power conditioner 110 at a frequency of 61.5 Hz or lower, the electronic device of the third highest priority is connected to the power conditioner 110 at a frequency of 61 Hz or lower, the electronic device of the fourth highest priority is connected to the power conditioner 110 at a frequency of 60.5 Hz or lower, and the electronic device of the fifth highest priority is connected to the power conditioner 110 at a frequency of 60 Hz or lower, among the electronic devices 200A_1 to 200A_5.

### Fifth Embodiment

A fifth embodiment relates to mounting of a power storage device.

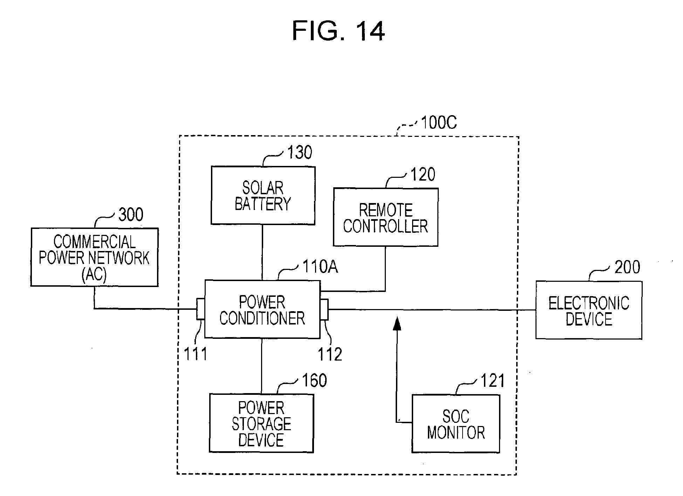

Fig. 14 illustrates a schematic configuration of a power supply device 100C. The power supply device 100C is the same as the power supply device 100 illustrated in Fig. 1 except that the power supply device 100C includes a power storage device 160 and a power conditioner 110A corresponding to the power storage device 160.

The power storage device 160 is capable of being charged with power of the solar battery 130 or the commercial power network 300 obtained via the power conditioner 110A. Also, the power conditioner 110A is capable of outputting the power stored in the power storage device 160 as AC power. Further, the power conditioner 110A and the power storage device 160 are capable of communicating with each other, and the power conditioner 110A is capable of obtaining information about residual capacity (state of charge (SOC)) of the power storage device 160.

With the above-described configuration, the power supply device 100C is capable of supplying not only the power generated by the solar battery 130 but also the power stored in the power storage device 160, which is an AC power, to the electronic device 200.

The amount of power that the power supply device 100C is capable of supplying to the electronic device 200 also depends on the SOC of the power storage device 160. Thus, the power consumption of the electronic device 200 may be adjusted in accordance with the SOC of the power storage device 160.

Thus, for example, the frequency may be set to 59 Hz in a case where the SOC is 90% or more, and the frequency may be decreased as the SOC decreases (the frequency may be set to 57 Hz in a case where the SOC is 10% or less). Accordingly, the power consumption of the electronic device 200 may be adjusted in accordance with the SOC. Also, information about the SOC of the power storage device 160 may be obtained only by detecting the frequency of the output power of the power conditioner 110A, and the information may be displayed on a display (SOC monitor 121).

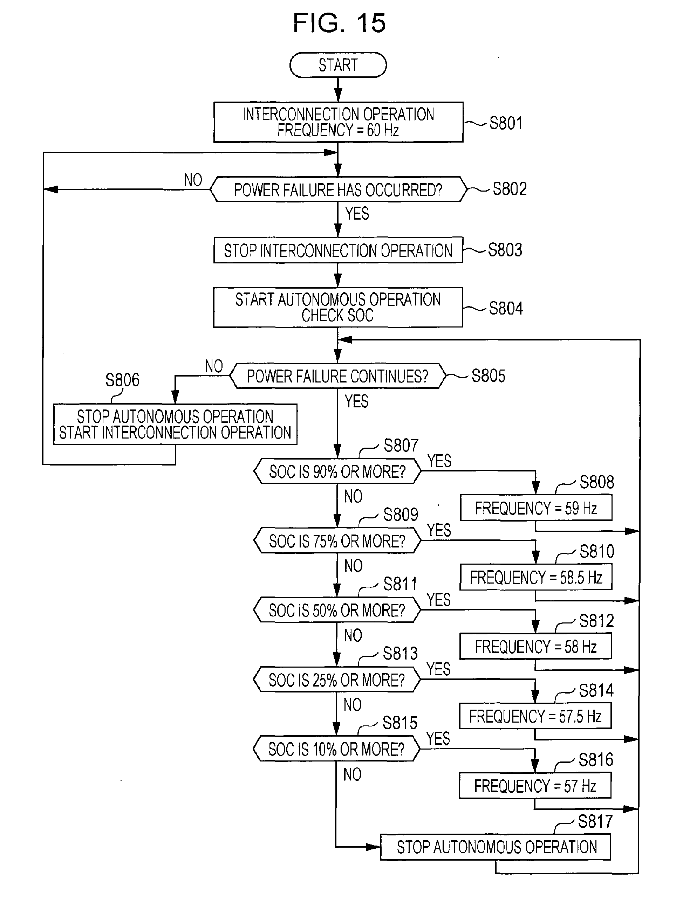

Fig. 15 is a flowchart illustrating a process executed by the power conditioner 110A. Steps S801 to S803 are the same as steps S101 to S103 in Fig. 4, and thus the description is not repeated here. Hereinafter, a description will be given from step S804.

Referring to Figs. 14 and 15, the power conditioner 110A checks the SOC of the power storage device 160 at the start of autonomous operation (step S804), and further determines whether or not power failure continues (step S805).

If power failure has ended (NO in step S805), the power conditioner 110A stops autonomous operation and starts grid connected operation (step S806). After that, the power conditioner 110A returns to step S802. On the other hand, if power failure continues (YES in step S805), the power conditioner 110A determines whether or not the SOC is 90% or more (step S807).

If the SOC is 90% or more (YES in step S807), the power conditioner 110A performs control so that the frequency becomes 59 Hz (step S808). On the other hand, if the SOC is less than 90% (NO in step S807), the power conditioner 110A determines whether or not the SOC is 75% or more (step S809).

If the SOC is 75% or more (YES in step S809), the power conditioner 110A performs control so that the frequency becomes 58.5 Hz (step S810). On the other hand, if the SOC is less than 75% (NO in step S809), the power conditioner 110A determines whether or not the SOC is 50% or more (step S811).

If the SOC is 50% or more (YES in step S811), the power conditioner 110A performs control so that the frequency becomes 58 Hz (step S812). On the other hand, if the SOC is less than 50% (NO in step S811), the power conditioner 110A determines whether or not the SOC is 25% or more (step S813).

If the SOC is 25% or more (YES in step S813), the power conditioner 110A performs control so that the frequency becomes 57.5 Hz (step S814). On the other hand, if the SOC is less than 25% (NO in step S813), the power conditioner 110A determines whether or not the SOC is 10% or more (step S815).

If the SOC is 10% or more (YES in step S815), the power conditioner 110A performs control so that the frequency becomes 57 Hz (step S816). On the other hand, if the SOC is less than 10% (NO in step S815), the power conditioner 110A stops autonomous operation (step S817) and returns to step S805.

Accordingly, the power consumption of the electronic device 200 may be adjusted in accordance with the SOC. Also, information about the SOC of the power storage device 160 may be obtained only by detecting the frequency of the output power of the power conditioner 110A, and the information may be displayed on a display (SOC monitor 121).

In the above-described fifth embodiment, the power conditioner 110A performs control to decrease the frequency from 60 Hz in accordance with the state of the SOC, but the embodiment is not limited thereto. For example, the power conditioner 110A may perform control to increase the frequency from 60 Hz in accordance with the state of the SOC. For example, the frequency may be set to 61 Hz in a case where the SOC is 90% or more, and the frequency may be increased as the SOC decreases (the frequency may be set to 63 Hz in a case where the SOC is 10% or less).

### Sixth Embodiment

A sixth embodiment relates to cancellation of frequency control.

For example, in a lighting device such as a fluorescent lamp, the illuminance may vary or flicker may occur depending on the frequency of an AC power. To suppress such flicker, the frequency of the AC power may be set to be constant (for example, 60 Hz).

Therefore, the power supply devices 100, 100A, 100B, and 100C illustrated in Figs. 1, 8, 12, and 14 may perform control so that the frequency is 60 Hz during autonomous operation as well as during grid connected operation (have a function of cancelling frequency control).

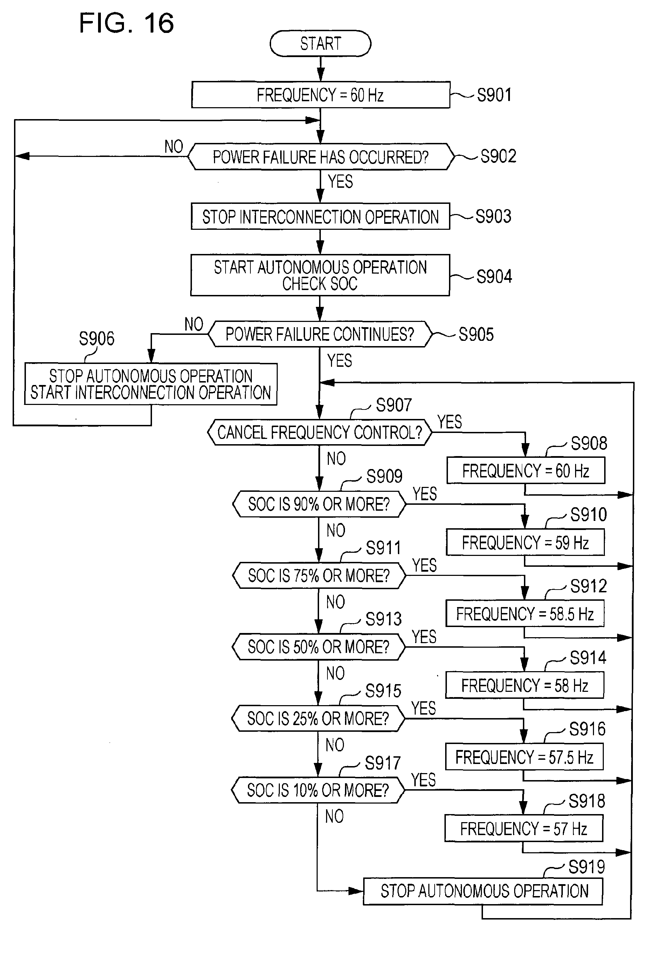

Fig. 16 is a flowchart illustrating a process executed by the power conditioner 110A of the power supply device 100C (Fig. 14) in the case of cancelling frequency control. The flowchart illustrated in Fig. 16 is the same as that illustrated in Fig. 15 except that steps S907 and S908 are added, and thus a description will be given of the part different from Fig. 15.

Referring to Figs. 14 and 16, the power conditioner 110A determines in step S907 whether or not frequency control is to be cancelled. Whether or not frequency control is to be cancelled may be set, for example, by providing an instruction to the power conditioner 110A via the remote controller 120 by a user.

If frequency control is to be cancelled (YES in step S907), the power conditioner 110A performs control so that the frequency becomes 60 Hz (step S908). On the other hand, if frequency control is not to be cancelled (NO in step S907), the power conditioner 110A proceeds to step S909.

At the time of the above-described operation of cancelling frequency control, the power consumption of an electronic device is not decreased, and thus some restrictions may be imposed on the operation of the electronic device. For example, the operation of cancelling frequency control may be stopped when a certain period has elapsed since the start of the cancellation operation, when the SOC becomes a certain value or less, or when the power consumption in the electronic device 200 exceeds the power that can be supplied from the power supply device 100 or the like.

Also, the electronic device 200 (and 200A) may be capable of cancelling adjustment of power consumption in accordance with a frequency.

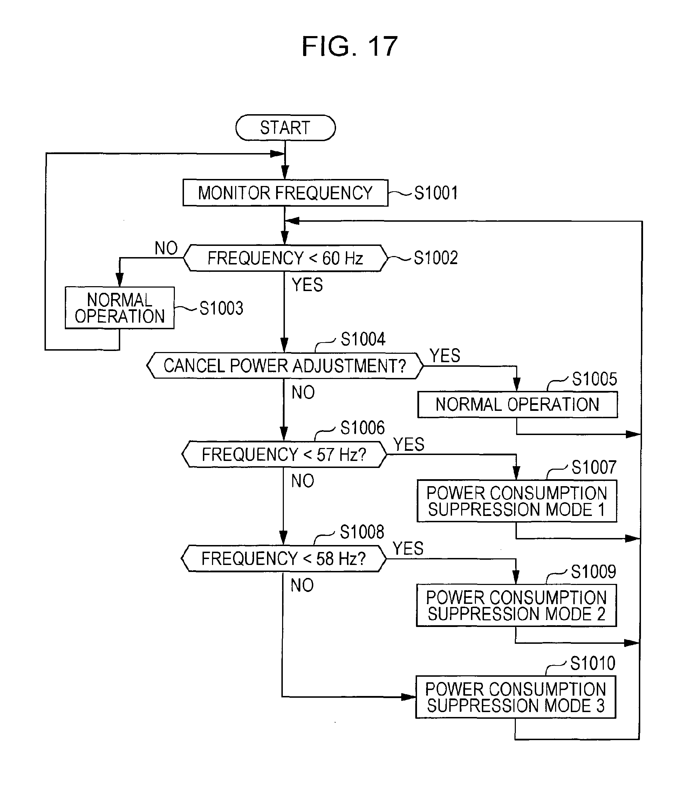

Fig. 17 is a flowchart illustrating a process executed by the electronic device 200 in the case of cancelling adjustment of power consumption. The flowchart illustrated in Fig. 17 is the same as that illustrated in Fig. 7 except that steps S1004 and S1005 are added, and thus a description will be given of the part different from Fig. 7.

In step S1004, the electronic device 200 determines whether or not adjustment of power consumption is to be cancelled. Whether or not adjustment of power consumption is to be cancelled is set by, for example, a user operation.

If adjustment of power consumption is to be cancelled (YES in step S1004), the electronic device 200 operates without decreasing power consumption (normal operation) (step S1005). On the other hand, if adjustment of power consumption is not to be cancelled (NO in step S1004), the electronic device 200 proceeds to step S1006.

Accordingly, the user may cancel frequency control if necessary, and use an electronic device with a constant frequency of AC power.

Alternatively, restrictions may be imposed to stop the cancellation operation when a certain period has elapsed from the start of the operation of cancelling adjustment of power consumption.

### Seventh Embodiment

A seventh embodiment relates to a power supply system.

As a power supply device, a device that uses a power generation device operated using a fuel cell or the like may be used, as well as a device that uses a solar battery or a power storage device. These power supply devices may be combined together to constitute a power supply system that performs frequency control.

The power supply system according to this embodiment is applicable to a mass housing, an office building, a factory, a housing complex, and the like that are provided with a fuel cell or a storage battery as well as a solar battery.

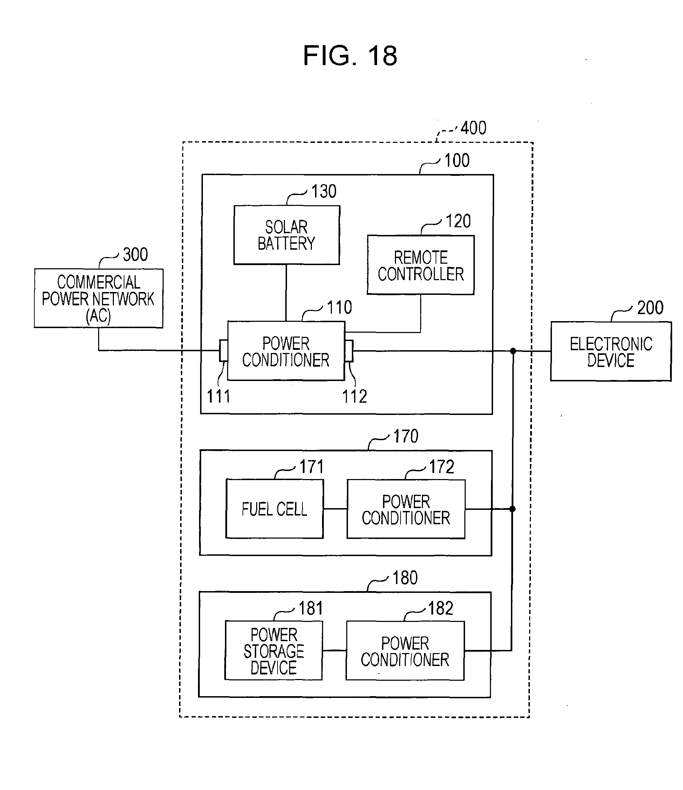

Fig. 18 illustrates a schematic configuration of a power supply system 400. The power supply system 400 includes the power supply device 100 illustrated in Fig. 1 serving a first power supply device, a fuel-cell-mounted power supply device 170 serving as a second power supply device, and a power-storage-device-mounted power supply device 180 serving as s third power supply device.

The fuel-cell-mounted power supply device 170 includes a fuel cell 171 serving as a power generator and a power conditioner 172 serving as a second power inverter. The power-storage-device-mounted power supply device 180 includes a power storage device 181 and a power conditioner 182 serving as a third power inverter. Instead of the fuel cell 171, a battery other than a storage battery, a solar battery, or a rectifier generator may be used as a power generator. The power storage device 181 may be a general storage battery or an electric double-layer capacitor. Here, examples of the storage battery include a lithium-ion battery, a lead storage battery, or a nickel-cadmium storage battery.

The power supply system according to an embodiment of the present disclosure may include either or both of the fuel-cell-mounted power supply device 170 and the power-storage-device-mounted power supply device 180.

In the power supply system according to an embodiment of the present disclosure, the number of fuel-cell-mounted power supply devices 170 and the number of power-storage-device-mounted power supply devices 180 are not particularly limited, and a plurality of fuel-cell-mounted power supply devices 170 or a plurality of power-storage-device-mounted power supply devices 180 may be provided.

It is necessary that the power supply device 100, the fuel-cell-mounted power supply device 170, and the power-storage-device-mounted power supply device 180 operate in conjunction with one another. Thus, one of these devices is set as a master, and the others are set as slaves. For example, in a case where the power supply device 100 is set as a master, the fuel-cell-mounted power supply device 170 and the power-storage-device-mounted power supply device 180 are set as slaves. In this case, in accordance with the frequency of the AC power supplied from the power supply device 100 serving as a master (hereinafter referred to as a "system frequency"), the fuel-cell-mounted power supply device 170 generates power, and the power-storage-device-mounted power supply device 180 performs charge or discharge. In a case where the power supply device 100 is set as a slave, the power supply device 100 outputs an AC power of the system frequency.

Here, in the case of being set as a slave, the fuel-cell-mounted power supply device 170 generates (supplies) power only in a case where the system frequency is higher than or equal to 57 Hz and is lower than 58 Hz. In the case of being set as a slave, the power-storage-device-mounted power supply device 180 performs discharge only in a case where the system frequency is lower than 57 Hz, and performs charge in a case where the system frequency higher than or equal to 60 Hz.

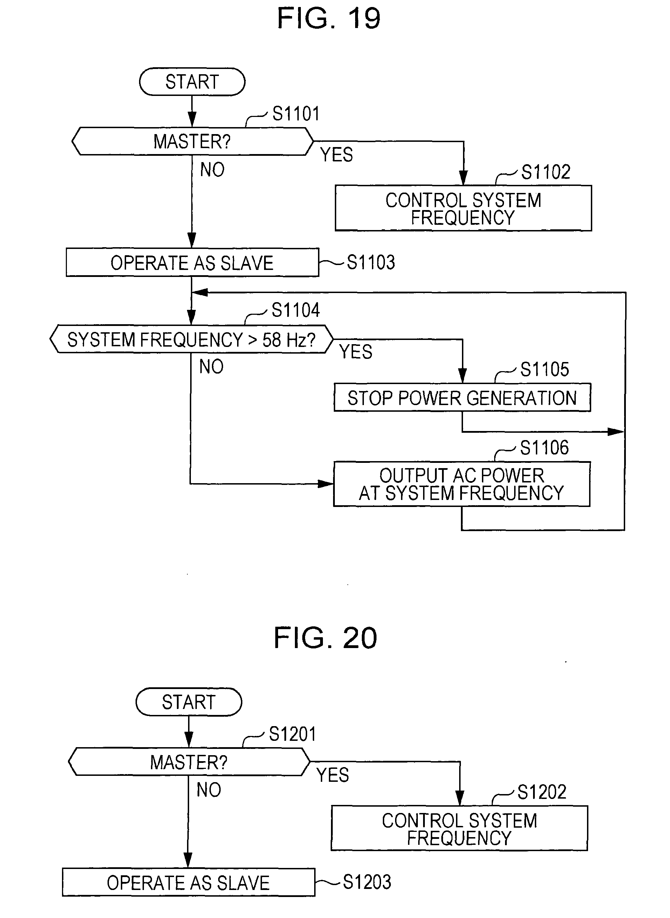

Fig. 19 is a flowchart illustrating a process executed by the fuel-cell-mounted power supply device 170.

Referring to Figs. 18 and 19, the fuel-cell-mounted power supply device 170 determines whether or not the fuel-cell-mounted power supply device 170 is a master (step S1101). Whether or not the fuel-cell-mounted power supply device 170 is a master is set by, for example, a user operation.

If the fuel-cell-mounted power supply device 170 is a master (YES in step S1101), the fuel-cell-mounted power supply device 170 controls a system frequency (step S1102). Specifically, the power conditioner 172 executes a process similar to the process executed by the power conditioner 110 illustrated in Fig. 6.

On the other hand, if the fuel-cell-mounted power supply device 170 is not a master (NO in step S1101), the fuel-cell-mounted power supply device 170 operates as a slave (step S1103).

The fuel-cell-mounted power supply device 170 operating as a slave determines whether or not the system frequency is higher than 58 Hz (step S1104).

If the system frequency is higher than 58 Hz (YES in step S1104), the fuel-cell-mounted power supply device 170 stops power generation (step S1105). On the other hand, if the system frequency is lower than or equal to 58 Hz (NO in step S1104), the fuel-cell-mounted power supply device 170 outputs an AC power at the system frequency (step S1106).

After step S1105 or S1106, the fuel-cell-mounted power supply device 170 returns to step S1104.

Fig. 20 is a flowchart illustrating a process executed by the power-storage-device-mounted power supply device 180 during autonomous operation.

Referring to Figs. 18 and 20, the power-storage-device-mounted power supply device 180 determines whether or not the power-storage-device-mounted power supply device 180 is a master (step S1201). Whether or not the power-storage-device-mounted power supply device 180 is a master is set by, for example, a user operation.

If the power-storage-device-mounted power supply device 180 is a master (YES in step S1201), the power-storage-device-mounted power supply device 180 controls a system frequency (step S1202). Specifically, the power conditioner 182 executes a process similar to the process executed by the power conditioner 110 illustrated in Fig. 6.

If the power-storage-device-mounted power supply device 180 is not a master (NO in step S1201), the power-storage-device-mounted power supply device 180 operates as a slave (step S1203).

Accordingly, the power supplied from the power supply device 100, the fuel-cell-mounted power supply device 170, and the power-storage-device-mounted power supply device 180 is used in this priority order, and thus the power stored in the power-storage-device-mounted power supply device 180 may be preserved.

In the above-described seventh embodiment, in the case of being set as a slave, the fuel-cell-mounted power supply device 170 and the power-storage-device-mounted power supply device 180 supply power when the system frequency is lower than 60 Hz, but the embodiment is not limited thereto. For example, the fuel-cell-mounted power supply device 170 may generate (supply) power only in a case where the system frequency is higher than 62 Hz and is lower than or equal to 63 Hz. The power-storage-device-mounted power supply device 180 may perform discharge only in a case where the system frequency is higher than 63 Hz, and may perform charge in a case where the system frequency is lower than 60 Hz.

Finally, the embodiments of the present disclosure will be summarized.

Referring to Figs. 1 and 2, a power supply device according to an embodiment of the present disclosure includes a power inverter (110), an operation mode switching unit (116A), and an output information control unit (116B). The power inverter is configured to receive a DC power supplied from a DC power source and output an AC power. The operation mode switching unit is configured to switch between grid connected operation and autonomous operation that are performed by the power supply device. The grid connected operation is operation in which power is supplied from an AC power network (300) and a DC power supply (130) to a load (200, 200A). The autonomous operation is operation in which the power supply device is disconnected from the AC power network and power is supplied from the DC power source to the load. The output information control unit is configured to control output information about the AC power output from the power inverter.

Accordingly, a load side may recognize that the power supply device is performing autonomous operation in accordance with change in the frequency or AC waveform of the power supplied thereto, without performing special communication with the power supply device. The load may adjust, for example, power consumption in accordance with the operation state of the power supply device.

The load may be an electronic device configured to adjust power consumption in accordance with a frequency. An adjustment range of the power consumption includes zero consumption (consumption of power by the load is stopped).

The power supply device may further include a voltage monitoring unit (116C) configured to monitor a voltage of the AC power. The frequency control unit (116B) controls a frequency so that the voltage monitored by the voltage monitoring unit becomes close to a certain voltage.

The electronic device (200, 200A) may decrease the power consumption in a case where the frequency increases or decreases from a certain frequency, and may increase the power consumption in a case where the frequency becomes close to the certain frequency. The frequency control unit (116B) causes. the power inverter (110) to increase or decrease the frequency from the certain frequency in a case where the voltage monitored by the voltage monitoring unit (116C) is lower than the certain voltage, and causes the power inverter (110) to cause the frequency to be close to the certain frequency in a case where the voltage monitored by the voltage monitoring unit (116C) is higher than or equal to the certain voltage.

Accordingly, the power supplied from the power supply device and the power consumed by the electronic device are balanced.

As illustrated in Fig. 8, the power supply device (100A) may further include an AC-input-type power storage device (140) configured to be charged with the AC power, the AC-input-type power storage device being charged in a case where the frequency increases or decreases from a certain frequency.

Accordingly, extra power of the power supply device is used for charging the AC-input-type power storage device, and thus the power generated by the power supply device may be maximally used in an effective manner.

As illustrated in Fig. 12, the power supply device (100B) may further include a connection state control unit (150) configured to control a connection state between the power supply device and a load in accordance with a frequency.

Accordingly, an electronic device having a relatively great necessity may be preferentially used.

As illustrated in Fig. 14, the power supply device (100C) may further include a power storage device (160). The frequency control unit (116B) may control a frequency in accordance with residual capacity of the power storage device.

Accordingly, the power consumption of the electronic device may be adjusted in accordance with the residual capacity of the power storage device.

The frequency control unit (116B) illustrated in Fig. 2 may perform control so that the frequency becomes a certain frequency in response to an instruction provided from a user.

Accordingly, the user may use the electronic device at the certain frequency.

Referring to Fig. 18, a power supply system (400) according to another embodiment of the present disclosure includes any one of the above-described power supply devices (100, 100A, 100B, 100C), a second power supply device (170), and a third power supply device (180). The second power supply device includes a power storage device and is charged with power supplied from the power supply device or supplies power to the load in accordance with a frequency. The third power supply device includes a power generation device and supplies power to the load in accordance with a frequency.

Referring to Fig. 3, an electronic device (200) according to another embodiment of the present disclosure uses power of an AC power network (300) of a certain voltage and a certain frequency, and includes a frequency monitoring unit (204) and a power consumption adjusting unit (203). The frequency monitoring unit is configured to monitor the frequency of the AC power supplied to the electronic device. The power consumption adjusting unit is configured to adjust power consumption in accordance with the frequency monitored by the frequency monitoring unit.

The power consumption adjusting unit (203) may decrease the power consumption in a case where the frequency monitored by the frequency monitoring unit (204) increases or decreases from a certain frequency, and increases the power consumption in a case where the frequency monitored by the frequency monitoring unit (204) becomes close to the certain frequency.

The power consumption adjusting unit (203) may adjust the power consumption in response to an instruction provided from a user so that the power consumption becomes power consumption in a case where the frequency monitored by the frequency monitoring unit (204) is equal to a certain frequency.

It should be considered that the embodiments disclosed here are examples from every point of view and are not restrictive. The scope of the present disclosure is specified by the scope of the claims, not by the description of the embodiments given above, and includes all the changes within the meaning and scope equivalent to the claims.

The present disclosure contains subject matter related to that disclosed in Japanese Priority Patent Application JP 2013-187278 filed in the Japan Patent Office on September 10, 2013, the entire contents of which are hereby incorporated by reference.

## Claims

1. A power supply device comprising:
a power inverter configured to receive a DC power supplied from a DC power source and output an AC power;
an operation mode switching unit configured to switch between grid connected operation and autonomous operation that are performed by the power supply device, the grid connected operation being operation in which power is supplied from an AC power network and the DC power source to a load, the autonomous operation being operation in which the power supply device is disconnected from the AC power network and power is supplied from the DC power source to the load; and
an output information control unit configured to control output information about the AC power output from the power inverter.

2. The power supply device according to Claim 1, wherein the output information control unit changes the output information from setting information that is set during the grid connected operation, before the grid connected operation is switched to the autonomous operation, or when the grid connected operation is switched to the autonomous operation, or after the grid connected operation is switched to the autonomous operation.

3. The power supply device according to Claim 1 or Claim 2, wherein the load is an electronic device that includes a monitoring unit configured to monitor the output information and that is configured to adjust power consumption in accordance with the output information.

4. The power supply device according to one of Claims 1 to 3, wherein the output information is a frequency or an AC waveform.

5. The power supply device according to Claim 4, wherein the output information is a frequency.

6. The power supply device according to Claim 4 or Claim 5, further comprising:
a voltage monitoring unit configured to monitor an AC voltage of the AC power,
wherein the output information control unit controls the frequency so that the AC voltage becomes close to a certain voltage.

7. The power supply device according to Claim 3, wherein
the output information is a frequency, and
the electronic device decreases the power consumption in a case where the frequency increases or decreases from a certain frequency, and increases the power consumption in a case where the frequency becomes close to the certain frequency.

8. The power supply device according to one of Claims 5 to 7, wherein the output information control unit increases or decreases the frequency from a certain frequency in a case where an AC voltage of the AC power is lower than a certain voltage, and causes the frequency to be close to the certain frequency in a case where the AC voltage is higher than or equal to the certain voltage.

9. The power supply device according to one of Claims 5 to 8, further comprising:
an AC-input-type power storage device configured to be charged with the AC power, the AC-input-type power storage device being charged in a case where the frequency increases or decreases from a certain frequency.

10. A power supply system comprising:
a first power supply device configured to perform grid connected operation and autonomous operation, the grid connected operation being operation in which power is supplied from an AC power network and a DC power source to a load, the autonomous operation being operation in which the first power supply device is disconnected from the AC power network and power is supplied from the DC power source to the load; and
a second power supply device,
the first power supply device including
a first power inverter configured to receive a DC power supplied from the DC power source and output an AC power,
an operation mode switching unit configured to switch between the grid connected operation and the autonomous operation, and
an output information control unit configured to control output information about the AC power output from the first power inverter,
wherein the output information control unit changes the output information from setting information that is preset during the grid connected operation, before the grid connected operation is switched to the autonomous operation, or when the grid connected operation is switched to the autonomous operation, or after the grid connected operation is switched to the autonomous operation,
the second power supply device adjusting an amount of power to be supplied to the load in accordance with the output information.

11. The power supply system according to Claim 10,
wherein
the second power supply device includes a power storage device and a second power inverter, and
the second power inverter selects, in accordance with the output information, converting the AC power output from the first power inverter to a DC power and charging the power storage device with the DC power, or converting a DC power output from the power storage device to an AC power and supplying the AC power to the load.

12. The power supply system according to Claim 10 or Claim 11, wherein the output information is a frequency or an AC waveform.

13. An electronic device comprising:
a monitoring unit configured to monitor output information about an AC power supplied to the electronic device; and
a power consumption adjusting unit configured to adjust power consumption in accordance with the output information monitored by the monitoring unit.

14. The electronic device according to Claim 13, wherein the output information is a frequency or an AC waveform.

15. The electronic device according to Claim 13, wherein
the output information monitored by the monitoring unit is a frequency, and
the power consumption adjusting unit decreases the power consumption in a case where the frequency increases or decreases from a certain frequency, and increases the power consumption in a case where the frequency becomes close to the certain frequency.
